# EUROPEAN PATENT SPECIFICATION

(11) **EP 0 338 269 B1**
(45) Date of publication and mention of the grant of the patent: **16.08.1995**
(21) Application number: 89105022.1
(22) Date of filing: 21.03.1989
(51) Int. Cl.: C08L 67/02

(54) **Solvent resistant, compatible blends of polyphenylene ethers and thermoplastic polyester mixtures**
Lösungsmittelbeständige, verträgliche Mischungen von Polyphenylenäthern und thermoplastischen Polyestern
Mélanges compatibles, résistant aux solvants de polyphénylène éthers et de polyesterthermoplastiques

(30) Priority: 18.04.1988 US 182690
(43) Date of publication of application: 25.10.1989
(73) Proprietor: GENERAL ELECTRIC COMPANY, Schenectady New York 12305 (US)
(72) Inventor: Brown, Sterling Bruce, Schenectady New York 12308 (US); Lowry, Richard Charles, Clifton Park New York 12065 (US)
(74) Representative: Pratt, Richard Wilson

(56) References cited:
- EP-A- 253 332
- WO-A-87/00850
- US-A- 4 013 613
- US-A- 4 123 410
- JOURNAL OF APPLIED POLYMERS SCIENCE, vol. 30, no. 10, 1985, pages 4081-4098,John Wiley & Sons, Inc., New York, US; L.M. ROBESON et al.: "Phase behavior of polyarylate blends"

## Description

This invention relates to novel resinous compositions with high impact strength, tensile strength and thermal stability. More particularly, it relates to improved compositions comprising polyphenylene ethers and thermoplastic polyesters.

The polyphenylene ethers are a widely used class of thermoplastic engineering resins characterized by excellent hydrolytic stability, dimensional stability, toughness, heat resistance and dielectric properties. They are also resistant to high temperature conditions under many circumstances. Because of the brittleness of many compositions containing polyphenylene ethers, they are frequently blended with impact modifiers such as elastomers to form molding compositions.

There has been considerable interest in recent years in compositions comprising polyphenylene ethers in combination with other resins having desirable properties. Illustrative of such resins are the thermoplastic polyesters including polyarylates and poly(alkylene dicarboxylates), especially the poly(alkylene terephthalates). However, such blends frequently undergo phase separation and delamination. They typically contain large, incompletely dispersed polyphenylene ether particles and no phase interaction between the two resin phases. Molded parts made from such blends are typically characterized by extremely low impact strength.

US-A-4013613 discloses intercrystalline normally rigid thermoplastic compositions comprising a combination of (a) very rapidly crystallizable polyester, (b) a crystalline or amorphous polymer and (c) a reinforcing filler for the combination. Examples of such compositions include compositions comprising polyphenylene ether (PPE) and polybutylene terephthalate.

EP-A-0253332 discloses polyphenylene ether-polyester copolymers useful for compatibilizing blends of polyphenylene ethers with polyesters such as poly(alkylene terephthalates), prepared by heating a polyphenylene ether with a polyester containing olefinic structural units, such as those derived from maleic or fumaric acid.

WO-A-8700850 discloses impact- and solvent-resistant resin blends prepared from a polyphenylene ether, or blend thereof with a polystyrene, a linear polyester such as poly(alkylene dicarboxylate), at least one elastomeric polyphenylene ether-compatible impact modifier and at least one polymer containing a substantial proportion of aromatic polycarbonate units as a compatibilizing agent. The polyphenylene ether is preferably inactivated to reduce the amount of unneutralized amino nitrogen to no greater than 800 ppm, by reaction with at least one non-volatile carboxylic acid or anhydride and/or by extrusion with vacuum venting.

In EP-A-0335101, there are described compatible polymer blends having excellent impact and/or tensile properties even after being subjected to prolonged heating cycles during injection molding and the like. Said blends comprise polyphenylene ethers, polyarylates, poly(alkylene dicarboxylates) and aromatic polycarbonates, and optionally also contain elastomeric polyphenylene ether-compatible impact modifiers. The present invention is based on the discovery that a specific genus of polycarbonate-free blends comprising polyphenylene ethers, polyarylates and poly(alkylene dicarboxylates) is also characterized by compatibility and good tensile properties.

The present invention is directed to polycarbonate-free resinous compositions comprising the following resinous components and any reaction products thereof, all percentage proportions being by weight of total resinous components;
(A) 30-45% of at least one polyphenylene ether containing at most 800 ppm. of unneutralized amino nitrogen;
(B) 50-65% of a polyester mixture comprising (B-1) 40-65%_{,} based on total polyester, of a polymer consisting essentially of structural units of the formula 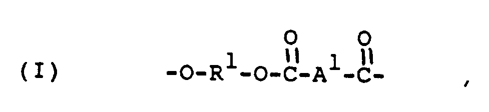 and (B-2) 35-60% of a polymer consisting essentially of structural units of the formula 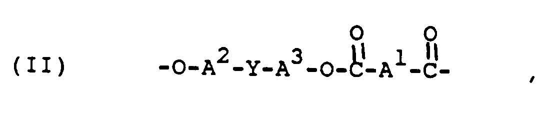 wherein:
   R¹ is a saturated C₂₋₁₀ divalent aliphatic or alicyclic hydrocarbon radical;
   each of A¹, A² and A³ is independently a monocyclic divalent aromatic radical; and
   Y is a divalent saturated C₁₋₁₂ aliphatic or alicyclic radical in which one or two atoms separate A² from A³; and
(C) from 0% to 20% of at least one elastomeric polyphenylene ether-compatible impact modifier.

It is not certain whether any or all of the components in these compositions interact chemically upon blending. Therefore, the invention includes compositions comprising said components and any reaction products thereof, as well as other optional components described hereinafter.

The polyphenylene ethers (also known as polyphenylene oxides) used as component A in the present invention comprise a plurality of structural units having the formula 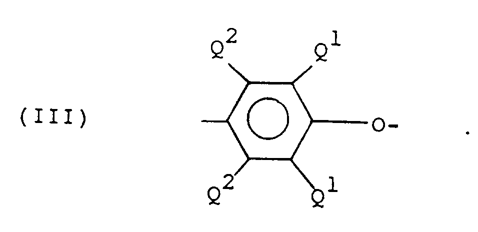
In each of said units independently, each Q¹ is independently halogen, primary or secondary lower alkyl (i.e., alkyl containing up to 7 carbon atoms), phenyl, haloalkyl, aminoalkyl, hydrocarbonoxy, or halohydrocarbonoxy wherein at least two carbon atoms separate the halogen and oxygen atoms; and each Q² is independently hydrogen, halogen, primary or secondary lower alkyl, phenyl, haloalkyl, hydrocarbonoxy or halohydrocarbonoxy as defined for Q¹. Examples of suitable primary lower alkyl groups are methyl, ethyl, n-propyl, n-butyl, isobutyl, n-amyl, isoamyl, 2-methylbutyl, n-hexyl, 2,3-dimethylbutyl, 2-, 3- or 4-methylpentyl and the corresponding heptyl groups. Examples of secondary lower alkyl groups are isopropyl, sec-butyl and 3-pentyl. Preferably, any alkyl radicals are straight chain rather than branched. Most often, each Q¹ is alkyl or phenyl, especially C₁₋₄ alkyl, and each Q² is hydrogen. Suitable polyphenylene ethers are disclosed in a large number of patents.

Both homopolymer and copolymer polyphenylene ethers are included. Suitable homopolymers are those containing, for example, 2,6-dimethyl-1,4-phenylene ether units. Suitable copolymers include random copolymers containing such units in combination with (for example) 2,3,6-trimethyl-1,4-phenylene ether units. Many suitable random copolymers, as well as homopolymers, are disclosed in the patent literature.

Also included are polyphenylene ethers containing moieties which modify properties such as molecular weight, melt viscosity and/or impact strength. Such polymers are described in the patent literature and may be prepared by grafting onto the polyphenylene ether in known manner such vinyl monomers as acrylonitrile and vinylaromatic compounds (e.g., styrene), or such polymers as polystyrenes and elastomers. The product typically contains both grafted and ungrafted moieties. Other suitable polymers are the coupled polyphenylene ethers in which the coupling agent is reacted in known manner with the hydroxy groups of two polyphenylene ether chains to produce a higher molecular weight polymer containing the reaction product of the hydroxy groups and the coupling agent. Illustrative coupling agents are low molecular weight polycarbonates, quinones, heterocycles and formals.

The polyphenylene ether generally has a number average molecular weight within the range of 3,000-40,000 and a weight average molecular weight within the range of 20,000-80,000, as determined by gel permeation chromatography. Its intrinsic viscosity is most often in the range of 0.15-0.6 and preferably at least 0.25 dl./g., as measured in chloroform at 25°C.

The polyphenylene ethers are typically prepared by the oxidative coupling of at least one corresponding monohydroxyaromatic compound. Particularly useful and readily available monohydroxyaromatic compounds are 2,6-xylenol (wherein each Q¹ is methyl and each Q² is hydrogen), whereupon the polymer may be characterized as a poly(2,6-dimethyl-1,4-phenylene ether), and 2,3,6-trimethylphenol (wherein each Q¹ and one Q² is methyl and the other Q² is hydrogen).

A variety of catalyst systems are known for the preparation of polyphenylene ethers by oxidative coupling. There is no particular limitation as to catalyst choice and any of the known catalysts can be used. For the most part, they contain at least one heavy metal compound such as a copper, manganese or cobalt compound, usually in combination with various other materials.

A first class of preferred catalyst systems consists of those containing a copper compound. Such catalysts are disclosed, for example, in U.S Patents 3,306,874, 3,306,875, 3,914,266 and 4,028,341. They are usually combinations of cuprous or cupric ions, halide (i.e., chloride, bromide or iodide) ions and at least one amine.

Catalyst systems containing manganese compounds constitute a second preferred class. They are generally alkaline systems in which divalent manganese is combined with such anions as halide, alkoxide or phenoxide. Most often, the manganese is present as a complex with one or more complexing and/or chelating agents such as dialkylamines, alkanolamines, alkylenediamines, o-hydroxyaromatic aldehydes, o-hydroxyazo compounds, ω-hydroxyoximes (monomeric and polymeric), o-hydroxyaryl oximes and β-diketones. Also useful are known cobalt-containing catalyst systems. Suitable manganese and cobalt-containing catalyst systems for polyphenylene ether preparation are known in the art by reason of disclosure in numerous patents and publications.

The polyphenylene ethers which may be used in the invention include those which comprise molecules having at least one of the end groups of the formulas 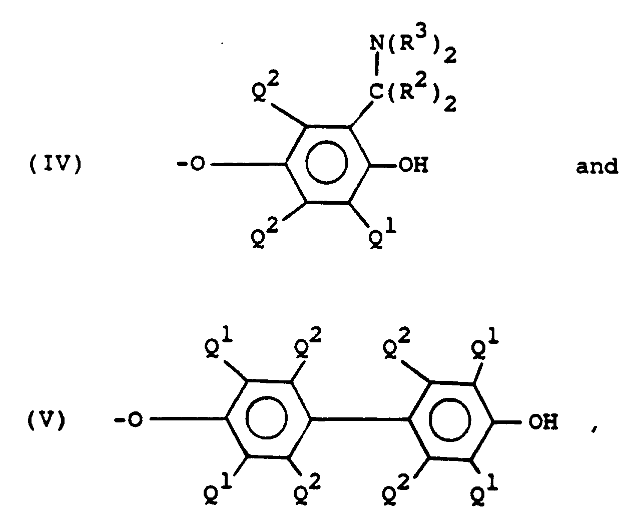
wherein Q¹ and Q² are as previously defined; each R² is independently hydrogen or alkyl, with the proviso that the total number of carbon atoms in both R² radicals is 6 or less; and each R³ is independently hydrogen or a C₁₋₆ primary alkyl radical. Preferably, each R² is hydrogen and each R³ is alkyl, especially methyl or n-butyl.

Polymers containing the end groups of formula IV (hereinafter "aminoalkyl end groups") may be obtained by incorporating an appropriate primary or secondary monoamine as one of the constituents of the oxidative coupling reaction mixture, especially when a copper- or manganese-cone taining catalyst is used. Such amines, especially the dialkylamines and preferably di-n-butylamine and dimethylamine, frequently become chemically bound to the polyphenylene ether, most often by replacing one of the α-hydrogen atoms on one or more Q¹ radicals. The principal site of reaction is the Q¹ radical adjacent to the hydroxy group on the terminal unit of the polymer chain. During further processing and/or blending, the aminoalkyl end groups may undergo various reactions, probably involving a quinone methide-type intermediate of the formula 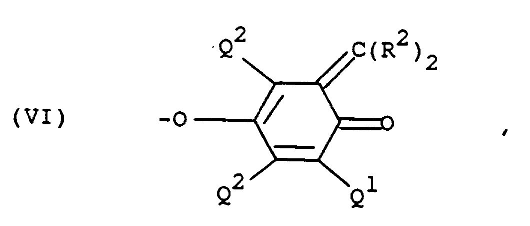
with numerous beneficial effects often including an increase in impact strength and compatibilization with other blend components. Reference is made to U.S. Patents 4,054,553, 4,092,294, 4,477,649, 4,477,651 and 4,517,341.

Polymers with 4-hydroxybiphenyl end groups of formula V are typically obtained from reaction mixtures in which a by-product diphenoquinone of the formula 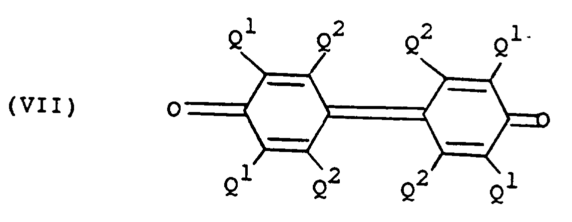
is present, especially in a copper-halide-secondary or tertiary amine system. In this regard, the disclosure of U.S. Patent 4,477,649 is again pertinent as are those of U.S. 4,234,706 and 4,482,697. In mixtures of this type, the diphenoquinone is ultimately incorporated into the polymer in substantial proportions, largely as an end group.

In many polyphenylene ethers obtained under the above-described conditions, a substantial proportion of the polymer molecules, typically constituting as much as about 90% by weight of the polymer, contain end groups having one or frequently both of formulas IV and V. In particular, polyphenylene ethers originally containing at least about 60% by weight of molecules having aminoalkyl end groups of formula V are contemplated for use in the present invention.

The use of polyphenylene ethers containing substantial amounts of unneutralized amino nitrogen generally affords compositions with undesirably low impact strengths. The possible reasons for this are explained hereinafter. The amino compounds include, in addition to the aforementioned aminoalkyl end groups, traces of amine (particularly secondary amine) in the catalyst used to form the polyphenylene ether.

According to the present invention, therefore, a substantial proportion of any amino compounds in the polyphenylene ether is removed or inactivated. Polymers so treated are sometimes referred to hereinafter as "inactivated polyphenylene ethers". They contain unneutralized amino nitrogen, if any, in amounts no greater than 800 ppm. and more preferably in the range of about 100-800 ppm. Various means for inactivation have been developed and any one or more thereof may be used.

One such method is to precompound the polyphenylene ether with at least one non-volatile compound containing a carboxylic acid, acid anhydride or ester group, which is capable of neutralizing the amine compounds. This method is of particular interest in the preparation of compositions of this invention having high resistance to heat distortion. Illustrative acids, anhydrides and esters are citric acid, malic acid, agaricic acid, succinic acid, succinic anhydride, maleic acid, maleic anhydride, diethyl maleate, citraconic acid, citraconic anhydride, itaconic acid, itaconic anhydride, fumaric acid, methyl fumarate and pyromellitic dianhydride. Because of their relatively high reactivity with amino compounds, the free carboxylic acids and their anhydrides, especially fumaric acid and pyromellitic dianhydride, are generally most useful.

Reaction of the polyphenylene ether with the acid or anhydride may be achieved by heating at a temperature within the range of 230-390°C, in solution or preferably in the melt. In general, 0.3-2.0 and preferably 0.5-1.5 parts (by weight) of acid or anhydride is employed per 100 parts of Polyphenylene ether. Said reaction may conveniently be carried out in an extruder or similar equipment.

Another method of inactivation is by extrusion of the polyphenylene ether under the above-described conditions with vacuum venting. This may be achieved either in a preliminary extrusion step (which is sometimes preferred) or during extrusion of the composition of this invention, by connecting the vent of the extruder to a vacuum pump capable of creating a pressure of 26 KPa (200 torr)or less.

It is believed that these inactivation methods aid in the removal by evaporation or the neutralization of any traces of free amines (predominantly secondary amines) in the polymer, including amines generated by conversion of aminoalkyl end groups to quinone methides of the type represented by formula VI. Polyphenylene ethers having a free amine nitrogen content below 600 ppm. have been found particularly useful in this invention. However, the invention is not dependent on any theory of inactivation.

Component B is a mixture of at least two thermoplastic polyesters, one being a poly(alkylene dicarboxylate) and the other being a polyarylate. Component B-1, the poly(alkylene dicarboxylate), consists essentially of structural units of formula I. The R¹ value therein is a C₂₋₁₀ saturated divalent aliphatic or alicyclic hydrocarbon radical, usually ethylene or tetramethylene, and A¹ is a divalent monocyclic aromatic radical and preferably m- or p-phenylene.

These polyesters generally have number average molecular weights in the range of 20,000-70,000, as determined by intrinsic visoosity (IV) at 30°C in a mixture of 60% phenol and 40% 1,1,2,2-tetrachloroethane by weight. When resistance to heat distortion is an important factor the polyester molecular weight should be relatively high, typically above 40,000.

Such polyesters are ordinarily prepared by the reaction of at least one diol such as ethylene glycol, 1,4-butanediol or 1,4-cyclohexanedimethanol with at least one aromatic dicarboxylic acid such as isophthalic or terephthalic acid, or lower alkyl ester thereof. Poly(ethylene terephthalate) and poly(butylene terephthalate), and especially the latter, are preferred; they are known in the art as illustrated by the following patents:

| | |
|---|---|
| 2,465,319 | 3,047,539 |
| 2,720,502 | 3,671,487 |
| 2,727,881 | 3,953,394 |
| 2,822,348 | 4,128,526. |

Component B-2 is a polyarylate consisting essentially of units of formula II, wherein each of A² and A³ is an aromatic radical similar to A¹. Most often, A² and A³ are both p-phenylene.

The bridging radical, Y, is a divalent saturated C₁₋₁₂ aliphatic or alicyclic radical such as methylene, cyclohexylmethylene, 2-[2.2.1]bicycloheptylmethylene, ethylene, ethylidene, 2,2-propylidene, 1,1-(2,2-dimethylpropylidene), cyclohexylidene, cyclopentadecylidene, cyclododecylidene or 2,2-adamantylidene, especially an alkylidene radical.

The polyarylate may be prepared by conventional methods, typically by the reaction of a bisphenol with a dicarboxylic acid or functional derivative thereof. The following bisphenols are illustrative:
Bis(4-hydroxyphenyl)methane
Bis(4-hydroxyphenyl)diphenylmethane
Bis(4-hydroxyphenyl)-1-naphthylmethane
1,1-Bis(4-hydroxyphenyl)ethane
1,2-Bis(4-hydroxyphenyl)ethane
1,1-Bis(4-hydroxyphenyl)-1-phenylethane
2,2-Bis(4-hydroxyphenyl)propane ("bisphenol A")
2-(4-Hydroxyphenyl)-2-(3-hydroxyphenyl) propane
2,2-Bis(4-hydroxyphenyl)butane
1,1-Bis(4-hydroxyphenyl)isobutane
1,1-Bis(4-hydroxyphenyl)cyclohexane
1,1-Bis(4-hydroxyphenyl)cyclododecane
Trans-2,3-bis(4-hydroxyphenyl)-2-butene
2,2-Bis(4-hydroxyphenyl)adamantane
Bis(4-hydroxyphenyl)acetonitrile
2,2-Bis(3-methyl-4-hydroxyphenyl)propane
2,2-Bis(3-ethyl-4-hydroxyphenyl)propane
2,2-Bis(3-n-propyl-4-hydroxyphenyl)propane
2,2-Bis(3-isopropyl-4-hydroxyphenyl)propane
2,2-Bis(3-sec-butyl-4-hydroxyphenyl)propane
2,2-Bis(3-t-butyl-4-hydroxyphenyl)propane
2,2-Bis(3-cyclohexyl-4-hydroxyphenyl)propane
2,2-Bis(3-allyl-4-hydroxyphenyl)propane
2,2-Bis(3-methoxy-4-hydroxyphenyl)propane
2,2-Bis(3,5-dimethyl-4-hydroxyphenyl)propane
2,2-Bis(2,3,5,6-tetramethyl-4-hydroxyphenyl)propane
2,2-Bis(3-5-dichloro-4-hydroxyphenyl)propane
2,2-Bis(3,5-dibromo-4-hydroxyphenyl)propane
2,2-Bis(2,6-dibromo-3,5-dimethyl-4-hydroxyphenyl)propane
α,α-Bis(4-hydroxyphenyl)toluene
α,α,α',α'-Tetramethyl-α,α'-bis(4-hydroxyphenyl)-p-xylene
2,2-Bis(4-hydroxyphenyl)hexafluoropropane
1,1-Dichloro-2,2-bis(4-hydroxyphenyl)ethylene
1,1-Dibromo-2,2-bis(4-hydroxyphenyl)ethylene
1,1-Dichloro-2,2-bis(5-phenoxy-4-hydroxyphenyl)ethylene
4,4'-Dihydroxybenzophenone
3,3-Bis(4-hydroxyphenyl)-2-butanone
1,6-Bis(4-hydroxyphenyl)-1,6-hexanedione
Bis(4-hydroxyphenyl) ether
Bis(4-hydroxyphenyl) sulfide
Bis(4-hydroxyphenyl) sulfoxide
Bis(4-hydroxyphenyl) sulfone
Bis(3,5-dimethyl-4-hydroxyphenyl) sulfone
9,9-Bis(4-hydroxyphenyl)fluorene
2,7-Dihydroxypyrene
6,6'-Dihydroxy-3,3,3',3'-tetramethylspiro-(bis)indane ("spirobiindane bisphenol")
3,3-Bis(4-hydroxyphenyl)phthalide.
Bisphenol A is ordinarily preferred by reason of its availablity and particular suitability.

Component B-2 is most often a bisphenol A isophthalate, terephthalate or mixed isophthalate-terephthalate. It generally has an intrinsic viscosity in the range of 0.5-1.0 dl./g., as determined under the conditions described hereinabove with reference to poly(alkylene dicarboxylates).

As previously mentioned, the proportions of the individual polyesters in component B are about 40-65% of component B-1 and about 35-60% of component B-2.

Polyesters tend to undergo hydrolytic degradation at the high extrusion and molding temperatures encountered by the compositions of this invention. Therefore, it is preferred that the polyester used as component B be substantially free of water.

The preferred compositions of this invention also contain (C) from 10 to 20% of at least one elastomeric polyphenylene ether-compatible impact modifier. Suitable impact modifiers include various elastomeric copolymers, of which examples are ethylene-propylene-diene polymers (EPDM's), both unfunctionalized and functionalized with (for example) sulfonate or phosphonate groups; carboxylated ethylene-propylene rubbers; block copolymers of alkenyl-aromatic compounds such as styrene with polymerizable olefins or dienes, including butadiene, isoprene, chloroprene, ethylene, propylene and butylene; and core-shell elastomers containing, for example, a poly(alkyl acrylate) core attached to a polystyrene shell via an interpenetrating network. Such core-shell elastomers are more fully disclosed in U.S. Patent 4,681,915.

The preferred impact modifiers are block (typically diblock, triblock or radial teleblock) copolymers of alkenylaromatic compounds and dienes. Most often, at least one block is derived from styrene and at least one other block from at least one of butadiene and isoprene. Especially preferred are the triblock copolymers with polystyrene end blocks and diene-derived midblocks. It is frequently advantageous to remove (preferably) or decrease the aliphatic unsaturation therein by selective hydrogenation. The weight average molecular weights of the impact modifiers are typically in the range of 50,000-300,000. Block copolymers of this type are commercially available from Shell Chemical Company under the trademark KRATON, and include KRATON D1101, G1650, G1651, G1652, G1657 and G1702.

Components A and B are present in the amounts of 30-45% and 50-65%, respectively, of total resinous components. Most often, component A comprises 30-40% and component B 50-60%, and component C is also present in the amount of 10-20%.

The chemical role of the inactivated polyphenylene ether in the compositions of this invention is not fully understood, and any reliance on chemical theory as a basis for the invention is specifically disclaimed. It is believed, however, that the presence of more than a certain minimum proportion of amino compounds in the polyphenylene ether can cause degradation in the molecular weight of the polyester. If this is true, the removal or neutralization of the greater part of such amino compounds produces an environment in which high molecular weight is maintained in said polyester.

It is within the scope of the invention for the composition to contain other conventional ingredients such as fillers, flame retardants, pigments, dyes, stabilizers, anti-static agents, mold release agents and the like. The presence of other resinous components is also contemplated. These include impact modifiers compatible with component B, such as various graft and core-shell copolymers of such monomers as butadiene, styrene, butyl acrylate and methyl methacrylate. It is frequently preferred to preextrude such impact modifiers with component B prior to its utilization in the invention. By this method, compositions having improved ductility at low temperatures may be prepared.

Also included as other resinous components are other impact and processability modifiers for component A, such as olefin copolymers. In general, the amounts of any other resinous components, if present, will not exceed 15% by weight of total resin.

The preparation of the compositions of this invention is normally achieved by merely blending the ingredients thereof under conditions adapted for the formation of an intimate blend. Such conditions often include extrusion, which may be conveniently effected in a screw-type or similar extruder which applies a substantial shearing force to the composition, thereby decreasing the particle size thereof. The extrusion temperature is generally in the range of 100-325°C.

In one embodiment of the invention, a single extruder is employed which has at least two ports for introduction of ingredients, one such port being downstream from the other. Component A or any reactants for preparation thereof and at least a portion of component C (when employed) are introduced through the first port and extruded, preferably at a temperature in the range of 300-350°C. This portion of the extruder is preferably vacuum vented.

The remaining ingredients are introduced through the downstream port and extrusion is continued, preferably at a lower temperature to minimize degradation of components B and C. For further minimization of degradation, it may be advantageous to introduce a portion of component C at this point. Typical extrusion temperatures at this stage are in the range of 260-320°C.

The invention is illustrated by the following examples. Percentages are by weight and are based on total resinous constituents. Impact and tensile values were determined in British units and have been converted to metric units. Heat distortion temperatures were determined at 0.455 MPa. unless otherwise indicated.

### Examples 1-2

Two compositions according to the invention were prepared from the following:
Component A - a poly(2,6-dimethyl-1,4-phenylene ether) having a number average molecular weight of about 20,000 and an intrinsic viscosity in chloroform at 25°C of 0.46 dl./g., which has been extruded on a twin screw extruder within the temperature range of 300-315°C with vacuum venting to a maximum pressure of 2.67 KPa (20 torr); it contained 438 ppm. nitrogen.
Component B:
PBT - a poly(butylene terephthalate) having a number average molecular weight of about 50,000, as determined by gel permeation chromatography.
Polyarylate - a commercially available bisphenol A isophthalate-terephthalate in which the acid moieties are present in equimolar amounts, having an intrinsic viscosity of 0.71 dl./g.
Component C - a commercially available triblock copolymer with polystyrene end blocks having weight average molecular weights of 29,000 and a hydrogenated butadiene midblock having a weight average molecular weight of 116,000.
The ingredients were tumble mixed in a jar mill for 1/2 hour and extruded at 120-260°C on a twin screw extruder with a screw speed of 400 rpm. The extrudate was quenched in water and pelletized. The pellets were then injection molded into test bars which were evaluated for notched Izod impact strength (ASTM procedure D256), heat distortion temperature (ASTM procedure D648) and tensile properties (ASTM procedure D638). The relevant parameters and test results are given in the following table.

| | Example | |
|---|---|---|
| | 1 | 2 |
| Component A, %: | 35 | 35 |

| Component B, %: | | |
|---|---|---|
| PBT | 26 | 31 |
| Polyarylate | 26 | 21 |
| Component C, % | 13 | 13 |
| Izod impact strength, joules/m. | 75 | 37 |

| Tensile strength, MPa.: | | |
|---|---|---|
| At break | 43.5 | 39.8 |
| At yield | 50.3 | 47.2 |
| Tensile elongation, % | 66 | 73 |
| Heat distortion temp., °C | 104 | -- |

## Claims

1. A polycarbonate-free resinous composition comprising the following resinous components and any reaction products thereof, all percentage proportions being by weight of total resinous components:
(A) 30-45% of at least one polyphenylene ether containing at most 800 ppm. of unneutralized amino nitrogen;
(B) 50-65% of a polyester mixture comprising (B-1) 40-65%, based on total polyester, of a polymer consisting essentially of structural units of the formula 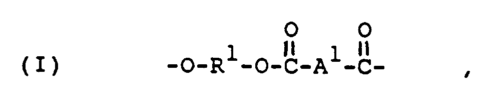 and (B-2) 35-60% of a polymer consisting essentially of structural units of the formula 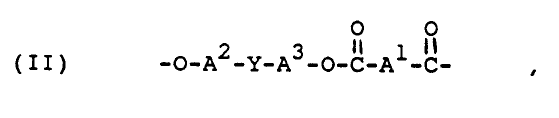 wherein:
R¹ is a saturated C₂₋₁₀ divalent aliphatic or alicyclic hydrocarbon radical;
each of A¹, A² and A³ is independently a monocyclic divalent aromatic radical; and
Y is a divalent saturated C₁₋₁₂ aliphatic or alicyclic radical in which one or two atoms separate A² from A³; and
(C) from 0% to 20% of at least one elastomeric polyphenylene ether-compatible impact modifier.

2. A composition according to claim 1 wherein component A comprises a plurality of structural units having the formula 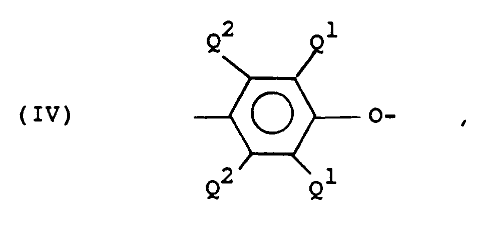 and in each of said units independently, each Q¹ is independently halogen, primary or secondary lower alkyl, phenyl, haloalkyl, aminoalkyl, hydrocarbonoxy, or halohydrocarbonoxy wherein at least two carbon atoms separate the halogen and oxygen atoms; and each Q² is independently hydrogen, halogen, primary or secondary lower alkyl, phenyl, haloalkyl, hydrocarbonoxy or halohydrocarbonoxy as defined for Q¹.

3. A composition according to claim 2 wherein component A is a poly(2,6-dimethyl-1,4-phenylene ether).

4. A composition according to claim 3 wherein the weight ratio of component A to component B is at most 1.2:1.

5. A composition according to claim 4 wherein component B-1 is poly(ethylene terephthalate) or poly(butylene terephthalate).

6. A composition according to claim 5 wherein component B-2 is a bisphenol A isophthalate, terephthalate or mixed isophthalate-terephthalate.

7. A composition according to claim 6 wherein component B-1 is a poly(butylene terephthalate) having a number average molecular weight in the range of 20,000-70,000.

8. A composition according to claim 7 wherein component B-2 has an intrinsic viscosity in the range of 0.5-1.0 dl./g., as determined at 30°C in a mixture of 60% phenol and 40% 1,1,2,2-tetrachloroethane by weight.

9. A composition according to claim 5 which contains 30-40% of component A, 50-60% of component B and 10-20% of component C.

10. A composition according to claim 9 wherein component C is a block copolymer of at least one alkenylaromatic compound and at least one diene.

11. A composition according to claim 10 wherein component C is a triblock copolymer wherein the end blocks are derived from styrene and the midblock is derived from at least one of isoprene and butadiene.

12. A composition according to claim 11 wherein component B-2 is a bisphenol A isophthalate, terephthalate or mixed isophthalate-terephthalate.

13. A composition according to claim 12 wherein component B-1 is a poly(butylene terephthalate) having a number average molecular weight in the range of 20,000-70,000.

14. A composition according to claim 13 wherein component B-2 has an intrinsic viscosity in the range of 0.5-1.0 dl./g., as determined at 30°C in a mixture of 60% phenol and 40% 1,1,2,2-tetrachloroethane by weight.

15. A composition according to claim 14 wherein the aliphatic unsaturation in the midblock of component C has been removed by selective hydrogenation.

## Patentansprüche

1. Polycarbonatfreie harzartige Zusammensetzung, enthaltend die folgenden Harz-Komponenten und Reaktionsprodukte derselben, wobei alle Prozentanteile auf das Gewicht der gesamten harzartigen Bestandteile bezogen sind:
(A) 30-45 % von Wenigstens einem Polyphenylenether, enthaltend höchstens 800 ppm. von nicht neutralisiertem Aminstickstoff.;
(B) 50-65 % einer Polyester-Mischung, enthaltend (B-1) 40-65% bezogen auf den gesamten Polyester eines Polymeren, bestehend im wesentlichen aus Struktureinheiten der Formel 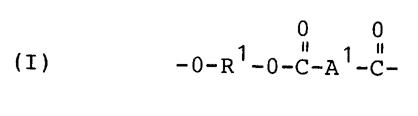 und (B-2) 35-60 % eines Polymeren, bestehend im wesentlichen aus Struktureinheiten der Formel 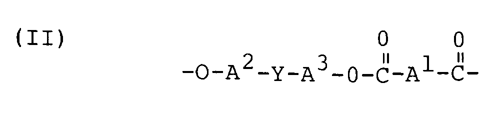 worin
R¹ ein gesättigter C₂₋₁₀ divalenter aliphatischer oder alicyclischer Kohlenwasserstoffrest ist,
jedes A¹, A² und A³ unabhängig ein monocyclischer zweiwertiger aromatischer Rest und
Y ein zweiwertiger gesättigter C₁₋₁₂ aliphatischer oder alicyclischer Rest ist, in welchem ein oder zwei Atome A² von A³ trennen und
(C) 0 bis 20 % wenigstens eines elastomeren Polyphenylenether-verträglichen Schlagmodifizierungsmittels.

2. Zusammensetzung nach Anspruch 1, worin die Komponente A eine Vielzahl von Struktureinheiten mit der Formel 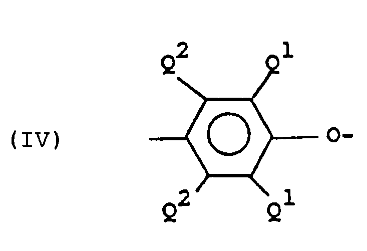 aufweist und in jeder der besagten Einheiten, unabhängig jedes Q¹, unabhängig Halogen, primäres oder sekundäres niederes Alkyl, Phenyl, Halogenalkyl, Amino-alkyl, Hydrocarbonoxy oder Halogenhydrocarbonoxy ist, worin wenigstens 2 Kohlenstoffatome die Halogen- und Sauerstoffatome trennen und jedes Q² unabhängig Wasserstoff, Halogen, primäres oder sekundäres niederes Alkyl, Phenyl, Halogenalkyl, Hydrocarbonoxy oder Halogenhydrocarbonoxy, wie für Q¹ definiert, ist.

3. Zusammensetzung nach Anspruch 2, worin die Komponente A ein Poly(2,6-dimethyl-1,4-phenylenether) ist.

4. Zusammensetzung nach Anspruch 3, worin das Gewichtsverhältnis von Komponente A zu Komponente B höchstens 1,2 zu 1 ist.

5. Zusammensetzung nach Anspruch 4, worin die Komponente B-1 Poly(ethylenterephthalat) oder Poly(butylen-terephthalat) ist.

6. Zusammensetzung nach Anspruch 5, worin die Komponente B-2 ein Bisphenol-A-isophthalat,-terephthalat, oder gemischtes Isophthalat-terephthalat ist.

7. Zusammensetzung nach Anspruch 6, worin die Komponente B-1 ein Poly(butylenterephthalat) mit einem zahlengemittelten Molekulargewicht im Bereich von 20.000 - 70.000 ist.

8. Zusammensetzung nach Anspruch 7, worin die Komponente B-2 eine grundmolare Viskosität im Bereich von 0,5-1,0 dl/g. bestimmt bei 30%°C in einer Mischung aus 60 Gewichts-% phenol und 40 Gewichts-% 1,1,2,2-tetrachlorethan aufweist.

9. Zusammensetzung nach Anspruch 5, welche 30-40% der Komponente A, 50-60% der Komponente B, und 10-20% der Komponente C aufweist.

10. Zusammensetzung nach Anspruch 9, worin die Komponente C ein Block Copolymer aus wenigstens einer alkenylaromatischen Verbindung und wenigstens einem Dien ist.

11. Zusammensetzung nach Anspruch 10, worin die Komponente C ein Triblockcopolymer ist, worin die Endblöcke abgeleitet sind von Styrol und der Mittelblock abgeleitet ist von wenigstens einem von Isopren und Butadien.

12. Zusammensetzung nach Anspruch 11, worin die Komponente B-2 ein Bisphenol-A-isophthalat,-terephthalat, oder gemischtes Isophthalat-terephthalat ist.

13. Zusammensetzung nach Anspruch 12, worin die Komponente B-1 ein Poly(butylenterephthalat) mit einem zahlengemittelten Molekulargewicht im Bereich von 20.000-70.000 ist.

14. Zusammensetzung nach Anspruch 13, worin die Komponente B-2 eine grundmolare Viscosität im Bereich von 0,5-1,0 dl/g, bestimmt bei 30° C in einer Mischung von 60 Gewichts-% Phenol und 40 Gewichts-% 1,1,2,2-Tetrachlorethan, aufweist.

15. Zusammensetzung nach Anspruch 14, worin die aliphatische Ungesättigtheit in dem Mittelblock der Komponente C durch selektive Hydrierung entfernt worden ist.

## Revendications

1. Composition résineuse, exempte de polycarbonate, comprenant les constituants résineux suivants, et tout produit de réaction de ces constituants, tous les pourcentages indiqués étant des pourcentages en poids par rapport au total des constituants résineux :
(A) 30 à 45% d'au moins un poly(éther de phénylène) contenant au plus 800 ppm d'azote de groupe amino non neutralisé;
(B) 50 à 65% d'un mélange de polyesters, comprenant (B-1) 40 à 65%, par rapport à la totalité des polyesters, d'un polymère constitué essentiellement de motifs de formule : 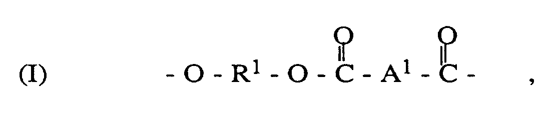 et (B-2) 35 à 60% d'un polymère constitué essentiellement de motifs de formule : 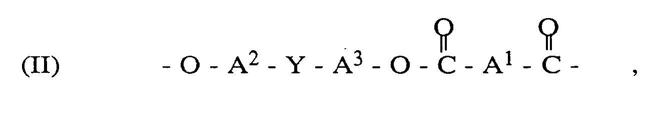 formules dans lesquelles :
R¹ représente un groupe hydrocarboné divalent saturé, aliphatique ou alicyclique, en C₂ à C₁₀;
chacun de A¹, A² et A³ représente indépendamment un groupe aromatique divalent monocyclique; et
Y représente un groupe saturé divalent, aliphatique ou alicyclique, en C₁ à C₁₂, dans lequel un ou deux atomes séparent A² de A³; et
(C) 0 à 20% d'au moins un agent élastomère modifiant la résistance aux chocs, compatible avec le poly(éther de phénylène).

2. Composition selon la revendication 1, dans laquelle le constituant A comprend plusieurs motifs répondant à la formule : 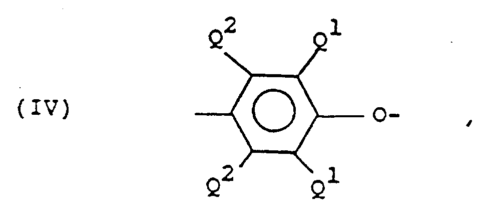 et, dans chacun de ces motifs indépendamment, chaque Q¹ représente indépendamment un atome d'halogène, un groupe alkyle inférieur primaire ou secondaire, un groupe phényle, un groupe halogénoalkyle, un groupe aminoalkyle, un groupe hydrocarbonoxy, ou un groupe halogénohydrocarbonoxy dans lequel au moins deux atomes de carbone séparent les atomes d'halogène et d'oxygène, et chaque Q² représente indépendamment un atome d'hydrogène ou d'halogène, un groupe alkyle inférieur primaire ou secondaire, un groupe phényle, un groupe halogénoalkyle, un groupe hydrocarbonoxy ou un groupe halogénohydrocarbonoxy tel que défini pour Q¹.

3. Composition selon la revendication 2, dans laquelle le constituant A est un poly(éther de 2,6-diméthyl-1,4-phénylène).

4. Composition selon la revendication 3, dans laquelle le rapport en poids du constituant A au constituant B est au plus de 1,2:1.

5. Composition selon la revendication 4, dans laquelle le constituant B-1 est du poly(téréphtalate d'éthylène) ou du poly(téréphtalate de butylène).

6. Composition selon la revendication 5, dans laquelle le constituant B-2 est un isophtalate de bisphénol A, un téréphtalate de bisphénol A ou un mélange d'isophtalate et de téréphtalate de bisphénol A.

7. Composition selon la revendication 6, dans laquelle le constituant B-1 est un poly(téréphtalate de butylène) ayant une masse moléculaire moyenne en nombre comprise dans l'intervalle allant de 20.000 à 70.000.

8. Composition selon la revendication 7, dans laquelle le constituant B-2 présente une viscosité intrinsèque comprise dans l'intervalle allant de 0,5 à 1,0 dl/g, cette viscosité étant déterminée à 30°C dans un mélange renfermant 60% en poids de phénol et 40% en poids de 1,1,2,2-tétrachloroéthane.

9. Composition selon la revendication 5, qui contient 30 à 40% du constituant A, 50 à 60% du constituant B et 10 à 20% du constituant C.

10. Composition selon la revendication 9, dans laquelle le constituant C est un copolymère séquencé d'au moins un composé alcénylaromatique et d'au moins un diène.

11. Composition selon la revendication 10, dans laquelle le constituant C est un copolymère à trois blocs, dans lequel les blocs terminaux proviennent du styrène et le bloc médian provient d'au moins l'un des composés isoprène et butadiène.

12. Composition selon la revendication 11, dans laquelle le constituant B-2 est un isophtalate de bisphénol A, un téréphtalate de bisphénol A ou un mélange d'isophtalate et de téréphtalate de bisphénol A.

13. Composition selon la revendication 12, dans laquelle le constituant B-1 est un poly(téréphtalate de butylène) ayant une masse moléculaire moyenne en nombre comprise dans l'intervalle allant de 20.000 à 70.000.

14. Composition selon la revendication 13, dans laquelle le constituant B-2 présente une viscosité intrinsèque comprise dans l'intervalle allant de 0,5 à 1,0 dl/g, cette viscosité étant déterminée à 30°C dans un mélange renfermant 60% en poids de phénol et 40% en poids de 1,1,2,2-tétrachloroéthane.

15. Composition selon la revendication 14, dans laquelle l'insaturation aliphatique du bloc médian du constituant C a été éliminée par hydrogénation sélective.
